# EUROPÄISCHE PATENTANMELDUNG

(11) **EP 4 227 916 A1**
(43) Veröffentlichungstag der Anmeldung: **16.08.2023**
(21) Anmeldenummer: 22156207.7
(22) Anmeldetag: 10.02.2022
(51) Int. Cl.: G07C 1/10, G07C 9/00, G06Q 10/08

(54) **ANWESENHEITSERFASSUNGSTERMINAL UND VERFAHREN ZUM BETREIBEN ZUM SCHUTZ GEGEN SABOTAGEHANDLUNGEN**

(71) Anmelder: dormakaba EAD GmbH, 78056 Villingen-Schwenningen (DE)
(72) Erfinder: Reinbold, Andreas, 78056 Villingen-Schwenningen (DE); Martin, Ruof, 78056 Villingen-Schwenningen (DE)
(74) Vertreter: Balder IP Law, S.L.

(57) **Zusammenfassung**

Die Erfindung betrifft ein computerimplementiertes Verfahren zum geschützten Betreiben eines Anwesenheitserfassungsterminals (10), insbesondere eines Zeiterfassungsterminals, zur Erfassung einer Anwesenheitsinformation einer Person (50; 50a; 50b) auf Basis einer Aktion der Person (50; 50a; 50b), umfassend die Schritte:
a) Detektieren einer physischen Fremdeinwirkung von außen auf das Anwesenheitserfassungsterminal (10);
b) Überprüfen, ob die physische Fremdeinwirkung von außen eine vorgegebene Auslösebedingung erfüllt;
c) Auslösen wenigstens einer Schutzfunktion, falls das Überprüfen ergibt, dass die physische Fremdeinwirkung von außen die Auslösebedingung erfüllt.

Ferner betrifft die Erfindung ein entsprechendes Anwesenheitserfassungsterminal.

## Beschreibung

Die vorliegende Erfindung betrifft ein computerimplementiertes Verfahren zum geschützten Betreiben eines Anwesenheitserfassungsterminals, insbesondere eines Zeiterfassungsterminals, zur Erfassung einer Anwesenheitsinformation einer Person auf Basis einer Aktion der Person. Ferner betrifft die Erfindung ein Anwesenheitserfassungsterminal, insbesondere Zeiterfassungsterminal, zur Erfassung einer Anwesenheitsinformation einer Person auf Basis einer Aktion der Person. Schließlich betrifft die Erfindung ein Computerprogramm zur Ausführung auf einem Prozessor eines Anwesenheitserfassungsterminals sowie ein computerlesbares Medium mit einem solchen Computerprogramm.

Anwesenheitserfassungsterminals sind insbesondere in der Arbeitswelt zur Erfassung der Anwesenheit eines/einer Mitarbeiters/-in weit verbreitet. Anwesenheitserfassungsterminals befinden sich häufig in Bürogebäuden, Fabrikhallen oder etwa auch Krankenhäusern. Mithilfe der Anwesenheitserfassungsterminals wird ein System bereitgestellt, was eine elektronische Erfassung und Speicherung von Mitarbeiteranwesenheiten erlaubt. Im Falle eines Zeiterfassungsterminals dient das Terminal auch zur Erfassung und Speicherung der absolvierten Arbeitszeiten. Allgemein wird in diesem Zusammenhang vorliegend von der Anwesenheitsinformation einer Person gesprochen, welche Person sich etwa über das Anwesenheitserfassungsterminal zur Arbeit einbuchen oder beispielsweise für eine Pause oder am Ende des Arbeitstags ausloggen bzw. aus dem System ausbuchen möchte.

Anwesenheitserfassungsterminals erlauben es zentral, etwa an einer Stelle im Eingangsbereich eines Bürogebäudes oder aber auch auf jeder Etage bzw. in jeder Abteilung eines Gebäudes/Unternehmens, einen Punkt zur Interaktion für die Personen bereitzustellen, über welchen einfach die Buchungsvorgänge realisiert werden können. Dem Arbeitgeber steht dann ein zentrales System zur Verfügung, etwa über die Speicherverwaltungseinheit des Anwesenheitserfassungs-Terminals, über welches/welche der Arbeitgeber ohne großen Aufwand die Anwesenheitsinformationen der Personen nachhalten kann.

Da der Ort für die Terminals häufig frei zugänglich ist, damit sich eine Person dort eben beispielsweise identifizieren und zur Arbeit einbuchen kann, laufen Anwesenheitserfassungsterminals auch Gefahr, durch Zugriffe von außen manipuliert zu werden. So können Sabotagehandlungen, die an Terminals ausgeführt werden, etwa die Zerstörung des Terminals zum Ziel haben. Eine mögliche Sabotagehandlung kann jedoch auch darin bestehen, etwa sensible Daten auf dem Terminal zu stehlen oder zu sabotieren.

Vor diesem Hintergrund ist eine der vorliegenden Erfindung zugrundeliegende Aufgabe, ein verbessertes computerimplementiertes Verfahren zum Betreiben Anwesenheitserfassungsterminal sowie ein entsprechendes Anwesenheitserfassungsterminal bereitzustellen, wodurch ein verbesserter Schutz gegenüber den Konsequenzen eines Sabotageversuchs von außen gewährleistet ist. Weiterhin liegt der vorliegenden Erfindung die Aufgabe zugrunde, ein entsprechendes Computerprogramm bereitzustellen, um den Schutz gegenüber Sabotagehandlungen zu verbessern.

Erfindungsgemäß werden die genannten Aufgaben durch das vorschlagsgemäße computerimplementierte Verfahren zum Betreiben eines Anwesenheitserfassungsterminals, sowie durch das vorschlagsgemäße Anwesenheitserfassungsterminal, insbesondere Zeiterfassungsterminal, zur Erfassung einer Anwesenheitsinformation einer Person auf Basis einer Aktion der Person, sowie durch das vorschlagsgemäße Computerprogramm mit den Merkmalen der entsprechenden unabhängigen Ansprüche gelöst. Darüber hinaus sind bevorzugte Ausführungsformen den abhängigen Ansprüchen sowie der Beschreibung zu entnehmen.

Im Einzelnen ist ein computerimplementiertes Verfahren zum geschützten Betreiben eines Anwesenheitserfassungsterminals zur Erfassung einer Anwesenheitsinformation einer Person auf Basis einer Aktion der Person vorgeschlagen. Bei dem Anwesenheitserfassungsterminal kann es sich insbesondere um ein Zeiterfassungsterminal handeln. Dabei umfasst das Verfahren die Schritte:
a) Detektieren einer physischen Fremdeinwirkung von außen auf das Anwesenheitserfassungsterminal;
b) Überprüfen, ob die physische Fremdeinwirkung von außen eine vorgegebene Auslösebedingung erfüllt;
c) Auslösen wenigstens einer Schutzfunktion, falls das Überprüfen ergibt, dass die physische Fremdeinwirkung von außen die Auslösebedingung erfüllt.

In Bezug auf das Anwesenheitserfassungsterminal ist im Einzelnen ein Anwesenheitserfassungsterminal zur Erfassung einer Anwesenheitsinformation einer Person auf Basis einer Aktion der Person, wobei es sich bei dem Anwesenheitserfassungsterminal insbesondere um ein Zeiterfassungsterminal handeln kann. Das Anwesenheitserfassungsterminal umfasst:
- eine Steuereinheit; sowie
- eine Überwachungseinrichtung zum Detektieren einer physischen Fremdeinwirkung von außen auf das Anwesenheitserfassungsterminal;
wobei die Steuereinheit derart eingerichtet ist, dass:
A) eine mittels der Überwachungseinrichtung detektierte physische Fremdeinwirkung dahingehend überprüft wird, ob sie eine vorgegebenen Auslösebedingung erfüllt; und
B) wenigstens eine Schutzfunktion ausgelöst wird, falls das Überprüfen in Schritt A) ergibt, dass die detektierte physische Fremdeinwirkung die Auslösebedingung erfüllt.

Die im Rahmen des vorschlagsgemäßen Anwesenheitserfassungsterminals vorstehend und nachfolgend beschriebenen Merkmale und Vorteile sind entsprechend auf das vorschlagsgemäße computerimplementierte Verfahren zum Betreiben eines Anwesenheitserfassungsterminals übertragbar. Dabei kann das computerimplementierte Verfahren zum Betreiben jenes vorschlagsgemäßen und beschriebenen Anwesenheitserfassungsterminals eingerichtet sein. Das vorschlagsgemäße und beschriebene Anwesenheitserfassungsterminal wiederum ist bevorzugt zur Ausführung des vorschlagsgemäßen computerimplementierten Verfahrens zum Betreiben eines Anwesenheitserfassungsterminals eingerichtet. Insofern werden die das Anwesenheitserfassungsterminal bzw. das Verfahren zum Betreiben des Anwesenheitserfassungsterminals betreffenden Merkmale und spezifische Vorteile regelmäßig gemeinsam nur einfach beschrieben. Im Zusammenhang mit der Vorrichtung des Anwesenheitserfassungsterminals beschriebene Merkmale sind entsprechend in das computerimplementierte Verfahren betreffende Ansprüche aufnehmbar und umgekehrt.

Ein wesentlicher Vorteil der vorliegenden Erfindung ist, dass in dem Anwesenheitserfassungsterminal (kurz: Terminal) eine Überwachungsfunktion implementiert ist, welche eine mögliche Sabotagehandlung frühzeitig und automatisch erkennt. Vorteilhaft können dann spezifische Schutzfunktionen ablaufen, um beispielsweise eine abschreckende Wirkung auf die die Sabotage ausführende Person auszuüben und somit die Sabotagehandlung gar vorzeitig zu beenden. Auch kann vorteilhaft die Nachverfolgung der Sabotagehandlung durchgeführt werden, da frühzeitig über eine Schutzfunktion beispielsweise auch Daten über die die Sabotage durchführende Person (beispielsweise Fotos) gesammelt werden können oder aber auch, indem eine zentrale Stelle über die versuchte Sabotagehandlung unmittelbar informiert wird. Ein weiterer Vorteil kann sein, dass über eine entsprechende Schutzfunktion ein Löschvorgang der sensiblen Daten auf dem Terminal ausgelöst wird, sodass die versuchte Sabotagehandlung wenigstens nicht zu einem Klau bzw. einer Manipulation sensibler Daten führen kann.

Mögliche Sabotagehandlungen werden über die vorgegebenen Auslösebedingungen definiert. Grundsätzlich kann es sich bei der Sabotage um eine versuchte Sabotage der Hardware handeln, jedoch beispielsweise auch um eine versuchte Software-Sabotage, wie etwa einen Hackerangriff. Ein einfaches Beispiel für eine Sabotagehandlung kann auch die wiederholt falsche Eingabe einer PIN sein. So kann es erforderlich sein, dass sich ein Nutzer über seine persönliche PIN zur Interaktion mit dem Terminal identifizieren muss. Wenn diese PIN jedoch beispielsweise dreimal falsch eingegeben worden ist, kann etwa eine Sabotagehandlung unterstellt werden und der Nutzer im Terminal für eine Interaktion wenigstens kurzzeitig gesperrt werden. Bei der physischen Fremdeinwirkung von außen handelt es sich in diesem Fall um die PIN-Eingabe der mit dem Terminal interagierenden Personen. Die vorgegebene Auslösebedingung ist in dem beschriebenen Fall, dass die PIN-Eingabe nicht dreimal hintereinander falsch erfolgen darf. Ist jene Auslösebedingung jedoch erfüllt, also die PIN dreimal hintereinander falsch eingegeben worden, so wird die Schutzfunktion in Form eines Sperrens des interagierenden Nutzers ausgelöst.

Das Detektieren der physischen Fremdeinwirkung von außen auf das Anwesenheitserfassungsterminal erfolgt mithilfe der Überwachungseinrichtung.

Dabei kann die Überwachungseinrichtung gegenständlicher Bestandteil des Terminals, also etwa in ein gemeinsames Gehäuse integriert, sein und somit das Detektieren durch das Terminal selbst erfolgen, beispielsweise über eingebaute Beschleunigungssensoren, Temperatursensoren, Kameras, etc. Die Überwachungseinrichtung kann jedoch auch alternativ oder zusätzlich extern vorgesehen sein, in Form eines Drittgeräts, sodass das Detektieren der physischen Fremdeinwirkung durch dieses Drittgerät erfolgen kann. Dabei kann es sich zum Beispiel um eine Kamera handeln, die außerhalb des Terminals platziert, zum Beispiel gegenüber dem Terminal aufgehängt, ist. Das Drittgerät kann direkt mit dem Terminal kommunizieren (drahtgebunden oder drahtlos) oder mit einem Server kommunizieren (drahtgebunden oder drahtlos), wobei der Server wiederum mit dem Terminal kommunizieren kann (drahtgebunden oder drahtlos).

Der Schritt des Überprüfens kann durch das Terminal (etwa durch eine Steuereinheit des Anwesenheitserfassungsterminals in Verbindung mit der Überwachungseinrichtung) oder durch einen Server (in Kommunikationsverbindung mit dem Terminal) erfolgen. Ebenso kann der Schritt des Auslösens entweder durch das Terminal (etwa durch eine Steuereinheit des Anwesenheitserfassungsterminals in Verbindung mit eine Schutzfunktion auslösenden Komponenten) oder durch ein Signal bzw. ein Befehl von einem Server (in Kommunikationsverbindung mit dem Terminal) erfolgen.

Bei dem Überprüfen, ob eine vorgegebene Auslösebedingung erfüllt ist oder nicht, können vorteilhaft Auslöseschwellenwerte verwendet werden. Ab Überschreiten des Auslöseschwellenwerts ist die vorgegebene Auslösebedingung sodann erfüllt und kann sodann davon ausgegangen werden, dass zumindest eine vermeintliche Sabotagehandlung vorliegt, sodass vorschlagsgemäß eine Schutzfunktion ausgelöst wird. Der Auslöseschwellenwert kann beispielsweise ein Krafteinwirkungsschwellenwert oder ein Temperaturschwellenwert (beide später näher beschrieben) oder ein anderer geeigneter Auslöseschwellenwert sein.

Vorteilhaft kann der Auslöseschwellenwert zusätzlich eine Bedingung enthalten, die besagt, dass eine bestimmte Tageszeit bzw. Uhrzeit vorliegen muss. Zum Beispiel kann die Auslösebedingung vorsehen und demnach in dem Auslöseschwellenwert ebenso als notwendige Bedingung hinterlegt sein, dass eine Uhrzeit außerhalb der Arbeitszeiten und/oder außerhalb der Gebäudeöffnungszeiten vorliegen muss. Dadurch wird die Überprüfung auf Sabotagehandlung bzw. die Reduzierung negativer Auswirkungen gerade auf sensible Uhrzeiten fokussiert, in denen Sabotagehandlungen verstärkt zu erwarten sind.

Zusätzlich oder alternativ kann vorgesehen sein, dass je nach Uhrzeit eine andere Auslösebedingung bzw. ein anderer Auslöseschwellenwert vorliegt. Dabei kann die Höhe oder aber auch der Typ der Auslösebedingung bzw. des Auslöseschwellenwerts angepasst sein. Beispielsweise kann außerhalb der Arbeitszeiten bzw. Gebäudeöffnungszeiten ein Krafteinwirkungsschwellenwert aus Auslöseschwellenwert niedriger angesetzt sein als während der Arbeitszeiten bzw. Gebäudeöffnungszeiten, denn insbesondere während der Arbeitszeiten bzw. Gebäudeöffnungszeiten wird das Terminal regulär bedient, sodass üblicherweise gewisse Krafteinwirkungen durch die reguläre Nutzung des Terminals vom System toleriert werden müssen. Gerade nachts kann die Toleranz geringer sensibler eingestellt und ein niedrigerer Krafteinwirkungsschwellenwert bereits als Sabotagehandlung interpretiert werden. Ein Temperaturschwellenwert wiederum kann außerhalb der Arbeitszeiten bzw. Gebäudeöffnungszeiten aus Auslöseschwellenwert ebenso niedriger angesetzt sein als während der Arbeitszeiten bzw. Gebäudeöffnungszeiten, denn beispielsweise insbesondere nachts ist es üblicherweise kälter als während der Arbeitszeiten bzw. Gebäudeöffnungszeiten.

Nach einer Ausführungsform des computerimplementierten Verfahrens zum Betreiben eines Anwesenheitserfassungsterminals ist vorgeschlagen, dass die Verfahrensschritte a) bis c) nur während wenigstens eines vorgegebenen Zeitraums ablaufen.

Nach einer weiteren Ausführungsform des Anwesenheitserfassungsterminals ist vorgeschlagen, dass die Überwachungseinrichtung derart eingerichtet ist, dass das Detektieren der physischen Fremdeinwirkung nur während wenigstens eines vorgegebenen Zeitraums abläuft.

Alternativ oder zusätzlich kann die Steuereinheit derart eingerichtet sein, dass die Schritte A) und B) in dem vorschlagsgemäßen Anwesenheitserfassungsterminal nur während wenigstens eines vorgegebenen Zeitraums ablaufen.

Wenn die Funktionen, die für das Erkennen von Sabotagehandlungen und dem Auslösen von Schutzfunktionen zum Reduzieren negativer Auswirkungen durch jene Sabotagehandlung nur zeitweise, also nicht permanent, ausgeführt werden, kann das Anwesenheitserfassungsterminal vorteilhaft energiesparender betrieben werden. Insbesondere können die genannten Schritte beispielsweise ausschließlich nachts und/oder ausschließlich außerhalb der Arbeitszeiten und/oder ausschließlich zu Tageszeiten, wenn es dunkel ist, ausgeführt werden. Dann ist der Schutz vor Sabotagehandlungen in Zeiten besonderer Gefährdung vorteilhaft erhöht.

Nach einer weiteren Ausführungsform des computerimplementierten Verfahrens zum Betreiben eines Anwesenheitserfassungsterminals ist vorgeschlagen, dass die physische Fremdeinwirkung von außen im Verfahrensschritt a) mittels wenigstens eines Beschleunigungssensors detektiert wird.

Insbesondere kann während des Überprüfens gemäß Verfahrensschritt b) ein detektiertes Beschleunigungssensorsignal mit einem vorgegebenem Krafteinwirkungsschwellenwert verglichen werden.

Nach einer weiteren Ausführungsform des Anwesenheitserfassungsterminals ist vorgeschlagen, dass die Überwachungseinrichtung zum Detektieren der physischen Fremdeinwirkung von außen wenigstens einen Beschleunigungssensor aufweist.

Dabei kann insbesondere während des Überprüfens gemäß Schritt A) in dem vorschlagsgemäßen Anwesenheitserfassungsterminal ein detektierts Beschleunigungssensorsignal mit einem vorgegebenem Krafteinwirkungsschwellenwert verglichen werden.

Es kann sowohl ein Beschleunigungssensor als auch mehrere Beschleunigungssensoren vorgesehen sein.

Über einen Beschleunigungssensor können insbesondere Sabotagehandlungen, die sich durch Krafteinwirkungen wie etwa Tritte, Schläge oder mechanische Manipulationsversuche kennzeichnen, schnell und sicher detektiert werden.

Nach einer weiteren Ausführungsform des computerimplementierten Verfahrens zum Betreiben eines Anwesenheitserfassungsterminals ist vorgeschlagen, dass die physische Fremdeinwirkung von außen im Verfahrensschritt a) mittels wenigstens eines Temperatursensors detektiert wird.

Insbesondere kann während des Überprüfens gemäß Verfahrensschritt b) eine detektierte Temperatur mit einem Temperaturschwellenwert verglichen werden.

Nach einer weiteren Ausführungsform des Anwesenheitserfassungsterminals ist vorgeschlagen, dass die Überwachungseinrichtung zum Detektieren zur Erfassung der physischen Fremdeinwirkung von außen wenigstens einen Temperatursensor aufweist.

Dabei kann insbesondere während des Überprüfens gemäß Schritt A) in dem vorschlagsgemäßen Anwesenheitserfassungsterminal eine erfasste detektierte Temperatur mit einem einer erwarteten Temperaturschwellenwert verglichen werden.

Vorzugsweise kann der Temperaturschwellenwert beim vorschlagsgemäßen Verfahren bzw. im vorschlagsgemäßen Anwesenheitserfassungsterminal in Abhängigkeit von der einer Umgebungstemperatur bestimmt werden.

Es kann sowohl ein Temperatursensor als auch mehrere Temperatursensoren vorgesehen sein.

Der Temperaturschwellenwert kann abhängig von der Umgebungstemperatur erhöht oder verringert werden. Dabei kann entweder eine erfasste Umgebungstemperatur einfließen (über ein Thermometer) oder auch eine im System hinterlegte Umgebungstemperatur (die etwa über eine Onlineverbindung zum Wetterdienst etc. abgerufen werden kann).

Der Temperatursensor kann derart eingerichtet sein, dass er sich abschalten kann, wenn eine vorgegebene Umgebungstemperatur überschritten ist. So kann vermieden werden, dass an besonders warmen Tagen Fehlinterpretationen stattfinden bzw. Fehlalarme ausgelöst werden.

Nach einer weiteren Ausführungsform des computerimplementierten Verfahrens zum Betreiben eines Anwesenheitserfassungsterminals ist vorgeschlagen, dass die physische Fremdeinwirkung von außen im Verfahrensschritt a) mittels wenigstens einer Kamera detektiert wird.

Insbesondere kann während des Detektierens gemäß Verfahrensschritt a) ein Kameratracking erfolgen und ein detektiertes Bewegungsmuster einer mit dem Anwesenheitserfassungsterminal interagierenden Person mit einem vorgegebenem Bewegungsmuster verglichen werden.

Nach einer weiteren Ausführungsform des Anwesenheitserfassungsterminals ist vorgeschlagen, dass die Überwachungseinrichtung zum Detektieren zur Erfassung der physischen Fremdeinwirkung von außen wenigstens eine Kamera aufweist.

Dabei kann insbesondere während des Überprüfens gemäß Schritt A) in dem vorschlagsgemäßen Anwesenheitserfassungsterminal ein Kameratracking stattfinden und ein detektiertes erfasstes Bewegungsmuster einer mit dem Anwesenheitserfassungsterminal interagierenden Person mit einem vorgegebenem Bewegungsmuster einer mit dem Anwesenheitserfassungsterminal interagierenden Person verglichen werden.

Es kann sowohl eine Kamera als auch mehrere Kameras vorgesehen sein.

Die Kamera bzw. wenigstens eine Kamera der mehreren Kameras kann entweder in das Anwesenheitserfassungsterminal integriert sein, also gegenständlicher Bestandteil etwa in einem gemeinsamen Gehäuse, oder aber auch separat ausgeführt sein. Separat ausgeführt kann die Kamera sodann mit dem Anwesenheitserfassungsterminal direkt kommunizierend eingerichtet sein (drahtgebunden oder drahtlos) oder aber mit einem Server in Kommunikationsverbindung stehen, welcher Server wiederum mit dem Anwesenheitserfassungsterminal kommunikativ verbunden ist.

Nach einer weiteren Ausführungsform des computerimplementierten Verfahrens zum Betreiben eines Anwesenheitserfassungsterminals ist vorgeschlagen, dass die Schutzfunktion im Verfahrensschritt c) ein Aufnehmen wenigstens eines Fotos mittels einer Kamera umfasst. Dabei kann insbesondere ein Beleuchtungswert eines Displays des Anwesenheitserfassungsterminals zur Aufnahme des Fotos erhöht werden.

Auf diese Weise können wichtige Informationen über den Sabotageversuch gesammelt werden, wie etwa ein Foto der sabotierenden Person. Das Erhöhen des Beleuchtungswerts des Displays kann die Qualität des Fotos im Hinblick auf den erkennbaren Informationsgehalt auch im Dunkeln steigern.

Alternativ oder zusätzlich kann im Rahmen des computerimplementierten Verfahrens zum Betreiben eines Anwesenheitserfassungsterminals vorgesehen sein, dass die Schutzfunktion im Verfahrensschritt c) ein Aufnehmen wenigstens einer Tonaufnahme mittels eines Mikrophons umfasst. Vorteilhaft können auch auf diese Weise wertvolle Informationen über den Sabotageversuch gesammelt werden.

Alternativ oder zusätzlich kann im Rahmen des computerimplementierten Verfahrens zum Betreiben eines Anwesenheitserfassungsterminals vorgesehen sein, dass die Schutzfunktion im Verfahrensschritt c) ein Ausgeben wenigstens eines akustischen Signals umfasst. Vorteilhaft kann somit der Sabotageversuch unmittelbar gestört und unter Umständen verhindert werden, da die sabotierende Person über das Warnsignal abgeschreckt werden kann. Zusätzlich können umstehende oder sich in der Nähe befindliche Personen derart über den Sabotageversuch informiert werden und weitere Gegenmaßnahmen einleiten.

Nach einer weiteren Ausführungsform des Anwesenheitserfassungsterminals ist vorgeschlagen, dass die Steuereinheit (21) derart eingerichtet ist, dass die Schutzfunktion im Schritt B) umfasst:
- Aufnehmen wenigstens eines Fotos mittels einer Kamera, und/oder
- Aufnehmen wenigstens einer Tonaufnahme mittels eines Mikrophons; und/oder
- Ausgeben wenigstens eines akustischen Signals.

Dabei ist das Anwesenheitserfassungsterminal bzw. die Steuereinheit vorzugsweise derart eingerichtet, dass ein Beleuchtungswert eines Displays des Anwesenheitserfassungsterminals zur Aufnahme des Fotos erhöht wird.

Im Rahmen der Erhöhung der Displayhelligkeit ist auch eine kurzzeitige Erhöhung über den Maximalwert möglich.

Weiterhin ist es bevorzugt, wenn das aufgenommene Bild- und/oder Tonmaterial weitergeleitet wird, beispielsweise an einen Server. Dies kann der Datensicherung über den Sabotageversuch dienen, sowie auch der unmittelbaren Information anderer Personen, beispielsweise im Unternehmen wie etwa einem Sicherheitsdienst.

Auch bei der Ausführung der genannten Schutzfunktionen ist es möglich, dass die Kamera (zur Aufnahme des Fotos), das Mikrophon (zur Aufnahme der Tonaufnahme) und/oder ein Lautsprecher zur Ausgabe eines akustischen Signals entweder in das Anwesenheitserfassungsterminal integriert ist oder separat ausgeführt ist und mit dem Anwesenheitserfassungsterminal direkt kommuniziert (drahtgebunden oder drahtlos) oder mit einem Server, der mit dem Anwesenheitserfassungsterminal kommunikativ verbunden ist, kommuniziert.

Nach einer weiteren Ausführungsform des computerimplementierten Verfahrens zum Betreiben eines Anwesenheitserfassungsterminals ist vorgeschlagen, dass die Schutzfunktion im Verfahrensschritt c) ein Versenden wenigstens einer Warnmitteilung umfasst. Dabei kann die Warnmitteilung insbesondere über eine kommunikationstechnische Verbindung, vorzugsweise eine Internetverbindung, an einen Server gesendet werden. Auf diese Weise können vorteilhaft umgehend relevante Personen über den Sabotageversuch informiert werden (beispielsweise ein Sicherheitsdienst)

Alternativ oder zusätzlich kann im Rahmen des computerimplementierten Verfahrens zum Betreiben eines Anwesenheitserfassungsterminals vorgesehen sein, dass die Schutzfunktion im Verfahrensschritt c) ein Löschen sensibler Daten, die im Anwesenheitserfassungsterminal gespeichert sind, umfasst. Dies kann besonders vorteilhaft ein Löschen aller lokal gespeicherter Daten des Anwesenheitserfassungsterminals umfassen. Auf diese Weise können negative Konsequenzen des Sabotageversuchs dahingehend reduziert werden, dass keine sensiblen Daten gestohlen werden können bzw. diese weniger leicht abzugreifen sind.

Alternativ oder zusätzlich kann im Rahmen des computerimplementierten Verfahrens zum Betreiben eines Anwesenheitserfassungsterminals vorgesehen sein, dass die Schutzfunktion im Verfahrensschritt c) ein Ausschalten des Anwesenheitserfassungsterminals umfasst. Dabei kann insbesondere eine Stromverbindung unterbrochen werden. Auf diese Weise können negative Konsequenzen des Sabotageversuchs vorteilhaft reduziert werden, denn die sabotierende Person hat keine Möglichkeit mehr mit dem Terminal wie gewünscht zu arbeiten bzw. Sabotagehandlungen wie beispielsweise Datenmanipulation durchzuführen.

Nach einer weiteren Ausführungsform des Anwesenheitserfassungsterminals ist vorgeschlagen, dass die Steuereinheit derart eingerichtet ist, dass die Schutzfunktion im Schritt B) ein Versenden wenigstens einer Warnmitteilung umfasst. Dabei kann die Warnmitteilung insbesondere über eine kommunikationstechnische Verbindung, vorzugsweise eine Internetverbindung, an einen Server gesendet werden. Auf diese Weise können vorteilhaft umgehend relevante Personen über den Sabotageversuch informiert werden (beispielsweise ein Sicherheitsdienst)

Alternativ oder zusätzlich kann die Steuereinheit des Anwesenheitserfassungsterminals derart eingerichtet sein, dass die Schutzfunktion im Verfahrensschritt c) ein Löschen sensibler Daten, die im Anwesenheitserfassungsterminal (10) gespeichert sind, umfasst. Dies kann besonders vorteilhaft ein Löschen aller lokal gespeicherter Daten des Anwesenheitserfassungsterminals umfassen. Auf diese Weise können negative Konsequenzen des Sabotageversuchs dahingehend reduziert werden, dass keine sensiblen Daten gestohlen werden können bzw. diese weniger leicht abzugreifen sind.

Alternativ oder zusätzlich kann die Steuereinheit des Anwesenheitserfassungsterminals derart eingerichtet sein, dass die Schutzfunktion im Verfahrensschritt c) ein Ausschalten des Anwesenheitserfassungsterminals umfasst. Dabei kann insbesondere eine Stromverbindung unterbrochen werden. Auf diese Weise können negative Konsequenzen des Sabotageversuchs vorteilhaft reduziert werden, denn die sabotierende Person hat keine Möglichkeit mehr mit dem Terminal wie gewünscht zu arbeiten bzw. Sabotagehandlungen wie beispielsweise Datenmanipulation durchzuführen.

Weiterhin wird die Aufgabe durch ein Computerprogramm gelöst, wobei das Computerprogramm Befehle umfasst, die bei der Ausführung des Programms durch einen Prozessor eines Anwesenheitserfassungsterminals das Anwesenheitserfassungsterminal veranlassen, die Schritte des zuvor bzw. nachfolgend beschriebenen vorschlagsgemäßen Verfahrens auszuführen.

Weiterhin wird ein computerlesbares Medium vorgeschlagen, auf dem das zuvor genannte Computerprogramm gespeichert ist.

Weitere vorteilhafte und bevorzugte Ausgestaltungen ergeben sich aus der nachfolgenden Beschreibung mit Bezug auf die Figuren. In den lediglich Ausführungsbeispiele wiedergebenden Zeichnungen zeigt
- Figur 1: eine perspektivische Ansicht eines Ausführungsbeispiels des vorschlagsgemäßen Anwesenheitserfassungsterminals;
- Figur 2: eine perspektivische Ansicht eines weiteren Ausführungsbeispiels des vorschlagsgemäßen Anwesenheitserfassungsterminals mit umgebenden Komponenten;
- Figur 3: eine schematische Konfiguration eines Ausführungsbeispiels eines vorschlagsgemäßen Anwesenheitserfassungsterminals;
- Figur 4: ein schematische Draufsicht auf eine Anordnung eines vorschlagsgemäßen Anwesenheitserfassungsterminals in einem Flur mit umgebenden Komponenten und Personen;
- Figur 5: ein Flussdiagramm der Verfahrensschritte eines vorschlagsgemäßen computerimplementierten Verfahrens zum Betreiben eines Anwesenheitserfassungsterminals;
- Figur 6: ein Flussdiagramm der Verfahrensschritte eines weiteren Ausführungsbeispiels eines vorschlagsgemäßen computerimplementierten Verfahrens zum Betreiben eines Anwesenheitserfassungsterminals;
- Figur 7: ein Flussdiagramm der Verfahrensschritte eines weiteren Ausführungsbeispiels eines vorschlagsgemäßen computerimplementierten Verfahrens zum Betreiben eines Anwesenheitserfassungsterminals; und
- Figur 8: ein Flussdiagramm der Verfahrensschritte eines weiteren Ausführungsbeispiels eines vorschlagsgemäßen computerimplementierten Verfahrens zum Betreiben eines Anwesenheitserfassungsterminals.

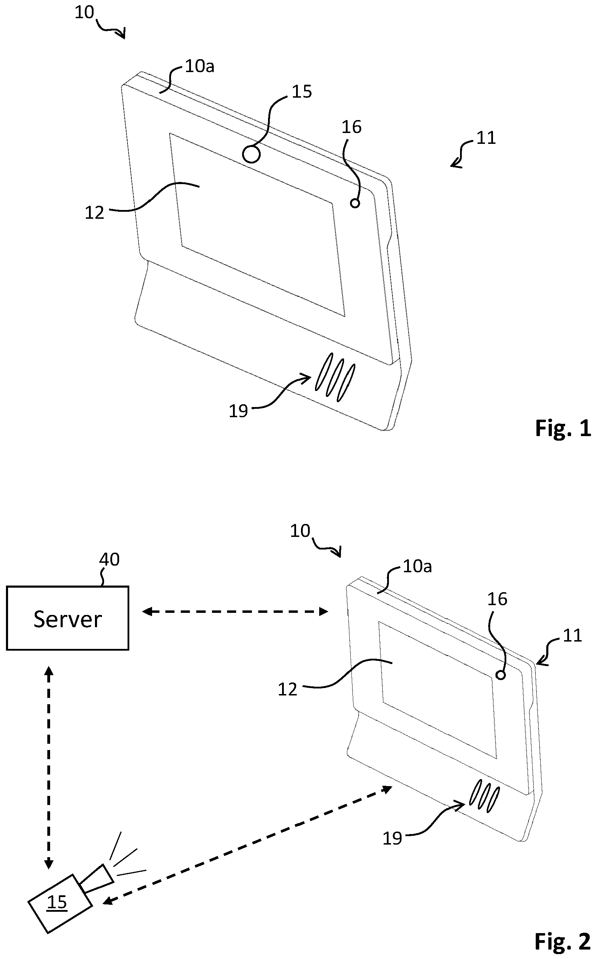

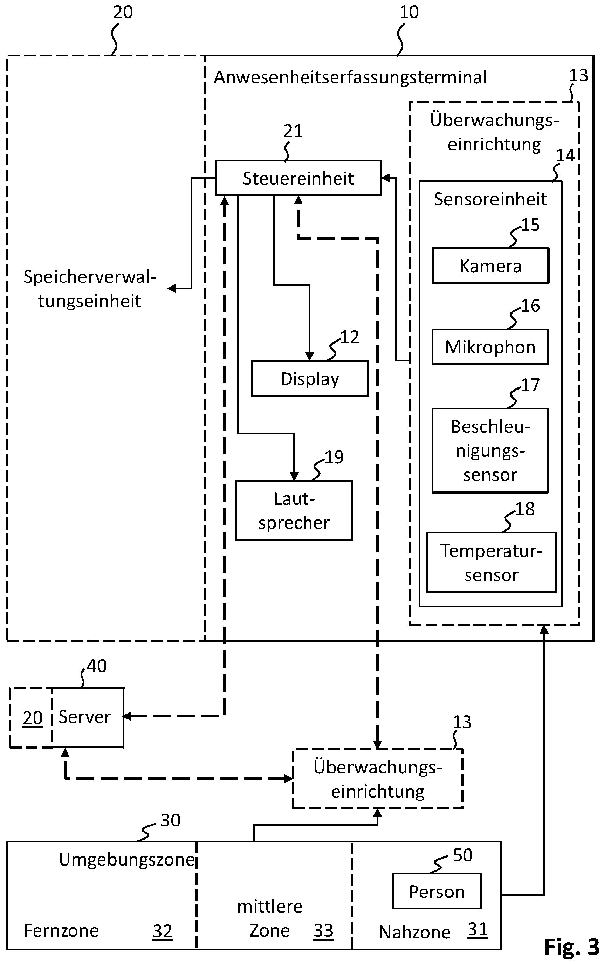

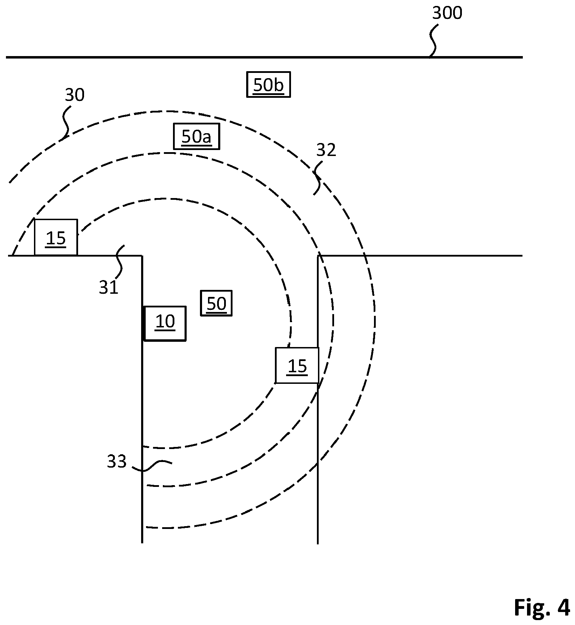

In Figur 1 ist schematisch ein Anwesenheitserfassungsterminal 10 dargestellt. Das Anwesenheitserfassungsterminal 10 dient der Erfassung einer Anwesenheitsinformation einer Person 50 (vgl. Figuren 3 und 4) auf Basis einer Aktion dieser Person 50. Das dargestellte Anwesenheitserfassungsterminal 10 kann etwa in Bürogebäuden, Fabrikhallen oder beispielsweise auch Krankenhäusern positioniert werden, sodass dort ein System bereitgestellt ist, welches eine elektronische Erfassung und Speicherung von Mitarbeiteranwesenheiten erlaubt. Das Anwesenheitserfassungsterminal 10 kann als Zeiterfassungsterminal ausgebildet sein und so auch zur Erfassung und Speicherung absolvierter Arbeitszeiten von Mitarbeitern dienen. Allgemein wird in diesem Zusammenhang vorliegend von der Anwesenheitsinformation einer Person 50 gesprochen, welche sich etwa über das Anwesenheitserfassungsterminal 10 zur Arbeit einbuchen oder beispielsweise für eine Pause oder am Ende des Arbeitstags ausloggen bzw. aus dem System ausbuchen möchte.

Das Anwesenheitserfassungsterminal 10 kann über seine in den Figuren 1 und 2 durch die Vorderseite des Anwesenheitserfassungsterminals 10 verdeckte, rückseitige Anbindungsstruktur 11 beispielsweise an einer Wand montiert werden. Es kann sodann zentral, etwa an einer Stelle im Eingangsbereich eines Bürogebäudes oder aber auch auf jeder Etage bzw. in jeder Abteilung eines Gebäudes bzw. Unternehmens, ein Punkt zur Interaktion für die Personen 50 bereitgestellt werden, wodurch auf einfache Weise die gewünschten Buchungsvorgänge realisiert werden können. Dem Arbeitgeber steht dann ein zentrales System zur Verfügung, etwa über eine Speicherverwaltungseinheit 20 des Anwesenheitserfassungsterminals 10, über welches/welche der Arbeitgeber ohne großen Aufwand die Anwesenheitsinformationen der Personen nachhalten kann (vgl. auch Figur 3). Jene Speicherverwaltungseinheit 20 kann integraler Bestandteil des Anwesenheitserfassungsterminals 10 sein oder etwa auch extern vorgesehen sein, beispielsweise auf einem Server 40, wie er in Figur 2 (vgl. auch Figur 3) angedeutet ist. Sodann kann über eine Kommunikationsverbindung (drahtgebunden oder drahtlos) zwischen einer integrierten Steuereinheit 21 des Anwesenheitserfassungsterminals 10 (Figur 3) und dem Server 40 der notwendige Informationsaustausch vorgenommen werden, also beispielsweise die Buchungsvorgänge der Mitarbeiter kommuniziert und dann in der Speicherverwaltungseinheit 20 auf dem Server 40 gespeichert werden. Jene Kommunikationsverbindung (drahtgebunden oder drahtlos) ist in den Figuren 2 und 3 durch gestrichelte Doppelpfeile zwischen den Komponenten angedeutet.

In Figur 3, welche eine schematische Konfiguration eines Ausführungsbeispiels des vorschlagsgemäßen Anwesenheitserfassungsterminals 10 zeigt, ist die Speicherverwaltungseinheit 20 jeweils gestrichelt gekennzeichnet, und zwar einmal als integraler Bestandteil des Anwesenheitserfassungsterminals 10 sowie ein weiteres Mal als Bestandteil des Servers 40. Die Speicherverwaltungseinheit 20 kann in einer Ausführungsform lediglich im Anwesenheitserfassungsterminal 10 (in ein gemeinsames Gehäuse 10a integriert) oder lediglich auf dem Server 40 realisiert sein, oder aber auch zumindest teilweise sowohl im Anwesenheitserfassungsterminal 10 als auch auf dem Server 40 realisiert sein.

Das Anwesenheitserfassungsterminal 10 weist, wie in den Figuren 1 und 2 zu erkennen, vorderseitig ein Display 12 auf, welches der Anzeige von Informationen für interagierende Personen 50 dient. Beispielsweise mit einer Touchscreen-Funktion ausgebildet kann das Display 12 auch unmittelbar der Interaktion der Person 50 dienen. Über das Display 12 kann der Person 50 zudem nach erfolgter Aktion, also etwa nach einer durchgeführten Buchung, ein Feedback über die Buchung angezeigt werden oder etwa auch eine Fehleranzeige.

Darüber hinaus umfasst das Anwesenheitserfassungsterminal 10 eine Überwachungseinrichtung 13, mittels der eine physische Fremdeinwirkung von außen auf das Anwesenheitserfassungsterminal 10 erfasst werden kann. Bei einer solchen physischen Fremdeinwirkung kann es sich beispielsweise um eine Krafteinwirkung von außen handeln, etwa wenn eine Person 50 versucht, von außen auf das Anwesenheitserfassungsterminal 10 in unerlaubter Weise zuzugreifen und das Terminal zu sabotieren. Es könnte sich bei der Fremdeinwirkung auch um eine die Struktur mechanisch belastende bzw. potentiell schädigende Einwirkung wie etwa Hitze handeln. Ebenso könnte die physische Fremdeinwirkung in der Form sein, dass die Software des Anwesenheitserfassungsterminals 10 angegriffen bzw. versucht wird, zu sabotieren. Grundsätzlich können Sabotagehandlungen als Hardware-Sabotage und/oder Software-Sabotage auftreten. Die Sabotagehandlungen, deren negative Konsequenzen für das Anwesenheitserfassungsterminal 10 bzw. dessen Betreiber mithilfe der vorliegenden Erfindung reduziert werden sollen, sind regelmäßig mit einem Eingriff auf das Innere des Anwesenheitserfassungsterminal 10 verbunden. Sei es, um Zugriff auf sensible Daten zu erhalten bzw. diese zu sabotieren, oder aber auch, um das Anwesenheitserfassungsterminal 10 mittels einer Gewalteinwirkung von außen zu beschädigen oder gar zu zerstören.

Die Überwachungseinrichtung 13 ist als Sensoreinheit 14 ausgebildet. Grundsätzlich wird mithilfe der Sensoreinheit 14 eine Umgebungszone 30 um das Anwesenheitserfassungsterminal 10 herum (vgl. Figur 4) beobachtet. Über die Beobachtung mittels der Sensoreinheit 14 werden Daten aufgenommen, die repräsentativ für die zu detektierende physische Fremdeinwirkung stehen. Die Überwachungseinrichtung 13 bzw. die Sensoreinheit 14 liefert dem Anwesenheitserfassungsterminal 10 also Daten aus der Umgebungszone 30 (wie in Figur 3 mittels durchgezogener Pfeile angedeutet). Dabei kann die Sensoreinheit 14 mehrteilig, etwa nur mittels eines Sensors, oder auch mehrteilig ausgebildet sein.

Die Überwachungseinrichtung 13 ist in dem dargestellten und insofern bevorzugten Ausführungsbeispiel der Figur 1 durch die beiden in das Anwesenheitserfassungsterminal 10 integrierten Komponenten Kamera 15 sowie Mikrophon 16 ausgebildet. Die Überwachungseinrichtung 13 könnte ebenso noch weitere Komponenten aufweisen, wie beispielsweise einen Beschleunigungssensor 17 bzw. einen Temperatursensor 18 (vgl. Figur 3), bzw. auch mehrere Kameras 15 und/oder mehrere Mikrophone 16. Wie Figur 1 zu entnehmen ist, sind sowohl die Kamera 15 als auch das Mikrophon 16 gegenständliche Bestandteile des Anwesenheitserfassungsterminal 10.

Ein zu dem in Figur dargestellten Anwesenheitserfassungsterminal 10 alternatives Ausführungsbeispiel ist in Figur 2 gezeigt, wobei bei dem dargestellten Anwesenheitserfassungsterminal 10 die Überwachungseinrichtung 13 teilweise außerhalb des Anwesenheitserfassungsterminals 10 angeordnet ist. Die Kamera 15 ist in Figur 2 nicht gegenständlicher Bestandteil des Anwesenheitserfassungsterminals 10, in dem Sinne, dass sie gemeinsam mit den weiteren Komponenten wie etwa dem Display 12 etc. in einem gemeinsamen Gehäuse 10a angeordnet wäre. Vielmehr ist die Kamera 15 in Figur 2 extern angeordnet und über eine - mittels gestricheltem Doppelpfeil angedeutete - Kommunikationsverbindung mit dem Anwesenheitserfassungsterminal 10 selbst oder etwa auch mit einem Server 40 verbunden (entweder drahtgebunden oder drahtlos). Die Sensoreinheit 14 bzw. die Überwachungseinrichtung 13 ist in dem Ausführungsbeispiel gemäß Figur 2 also zumindest teilweise über ein Drittgerät realisiert. Jenes Drittgerät steht mit dem Anwesenheitserfassungsterminal 10 in Kommunikationsverbindung (drahtgebunden oder drahtlos).

Die weitere Komponente der Überwachungseinrichtung 13 des Anwesenheitserfassungsterminals 10 gemäß Figur 2 in Form des Mikrophons 16 ist wiederum in das Anwesenheitserfassungsterminal 10 integriert, also in dem gemeinsamen Gehäuse 10a angeordnet. Auch hier ist es möglich, dass weitere Komponenten oder aber auch nur eine Komponente, zum Beispiel lediglich die extern angeordnete Kamera 15, die Überwachungseinrichtung 13 des Anwesenheitserfassungsterminals 10 ausbilden.

Sowohl in dem Ausführungsbeispiel gemäß Figur 1 als auch gemäß Figur 2 weist das Anwesenheitserfassungsterminal 10 einen Lautsprecher 19 auf. Über den Lautsprecher 19 können vorgegebene Informationen an mit dem Anwesenheitserfassungsterminal 10 interagierende Personen ausgegeben werden. Ferner kann der Lautsprecher 19 jedoch auch dahingehend verwendet werden, dass über den Lautsprecher 19 eine Schutzfunktion im Falle einer Sabotagehandlungen ausgeführt wird. So kann beispielsweise, falls eine Sabotagehandlung erkannt wird, über den Lautsprecher 19 ein akustisches Signal, beispielsweise ein lautes Warnsignal, ausgegeben werden.

Anhand der in Figur 3 dargestellten Konfiguration des Anwesenheitserfassungsterminals 10 wird ersichtlich, wie dieses Anwesenheitserfassungsterminal 10 mit seiner Umgebung interagiert. Das Anwesenheitserfassungsterminal 10 weist, wie zuvor ausgeführt, entweder als integralen gegenständlichen Bestandteil eine Speicherverwaltungseinheit 20 auf (oben in Figur 3 über den gestrichelt gekennzeichneten Kasten mit Bezugszeichen 20 angedeutet) oder aber die Speicherverwaltungseinheit 20 ist in den externen Server 40 integriert (unten links in Figur 3 angedeutet). Ebenso kann die Speicherverwaltungseinheit 20 teilweise in das Anwesenheitserfassungsterminal 10 gegenständlich eingebettet sein (in das gemeinsame Gehäuse 10a integriert), sowie gleichzeitig teilweise auf dem Server 40 ausgeführt sein.

In der Speicherverwaltungseinheit 20 werden bestimmungsgemäß die Anwesenheitsinformation von interagierenden Personen 50 gespeichert. Teilweise sind in der Speicherverwaltungseinheit 20 somit sensible, insbesondere personenbezogene, Daten gespeichert. Über die Integration der Speicherverwaltungseinheit 20 in dem Anwesenheitserfassungsterminal 10 können die Daten demnach lokal gespeichert sein, oder aber die Daten können etwa extern, beispielsweise online, in der auf dem Server 40 realisierten Speicherverwaltungseinheit 20 gespeichert sein.

Das Anwesenheitserfassungsterminal 10 umfasst ferner die Steuereinheit 21. Über die Steuereinheit 21 werden zum einen bestimmungsgemäß die Speichervorgänge gesteuert, also entweder Anwesenheitsinformationen von Personen 50 gespeichert bzw. bearbeitet. Zum anderen werden mithilfe der Steuereinheit 21 zunächst das Vorliegen einer Sabotagehandlung festgestellt, sowie daraufhin die vorschlagsgemäßen und später genauer beschriebenen Schutzfunktion im Falle einer erkannten Sabotagehandlung ausgeführt. Hierzu erhält die Steuereinheit 21 zum einen Information von der Überwachungseinrichtung 13. Zum anderen kann die Steuereinheit 21 etwa das Display 12 bzw. den Lautsprecher 19 steuern. Dies ist durch die durchgezogenen Pfeile in Figur 3 angedeutet.

Ferner weist das Anwesenheitserfassungsterminal 10 zwecks Detektierens physischer Fremdeinwirkungen und somit zwecks Erkennung einer Sabotagehandlung die Überwachungseinrichtung 13 auf, welche, wie in Figur 3 zu erkennen, die Sensoreinheit 14 umfasst. Die Sensoreinheit 14 weist dabei, wie zuvor im Rahmen von den Figuren 1 und 2 beschrieben, die Kamera 15 und das Mikrophon 16 auf. Ferner weist die Sensoreinheit 21 gemäß dargestellten Ausführungsbeispiel der Figur 3 den Beschleunigungssensor 17 sowie den Temperatursensor 18 auf.

Über den Beschleunigungssensor 17 werden Beschleunigungssensorsignale detektiert, die repräsentativ für beispielsweise durch Schläge und/oder Tritte von außen gegen das Anwesenheitserfassungsterminal 10 verursachte Krafteinwirkungen sind.

Über den Temperatursensor 18 wird die Temperatur detektiert, die ebenso repräsentativ für einen Sabotageversuch stehen kann, beispielsweise wenn ein Brand gelegt wird oder aber auch das Anwesenheitserfassungsterminal 10 mit Werkzeugen bearbeitet wird, welche Hitze verursachen.

Auch wenn in dem Ausführungsbeispiel gemäß Figur 3 sowohl eine externe Überwachungseinrichtung 13 als auch eine in das Anwesenheitserfassungsterminal 10, also in das gemeinsame Gehäuse 10a (vgl. Figuren 1 und 2), integrierte Überwachungseinrichtung 13 vorgesehen sind, kann beispielsweise nur eine der beiden dargestellten Überwachungseinrichtungen 13 realisiert sein.

Die eine oder mehrere Überwachungseinrichtung(en) 13 bzw. die eine oder mehrere Sensoreinheit(en) 14 beobachten konkret die Umgebungszone 30, erhalten also Informationen über das Geschehen in der Umgebungszone 30, empfangen also entsprechende Daten, wie durch den durchgezogenen Pfeil angedeutet. Dabei kann die Umgebungszone 30 wiederum, wie Figur 3 und an einem Bespiel einer Anordnung eines Anwesenheitserfassungsterminals 10 in einem Flur 300 ebenso Figur 4 zu entnehmen ist, in eine Mehrzahl an Unterzonen aufgeteilt sein. So ist eine Nahzone 31, die dem Anwesenheitserfassungsterminal 10 am nächsten angeordnet ist, sowie eine Fernzone 32, die am weitesten vom Anwesenheitserfassungsterminal 10 entfernt angeordnet ist, vorgesehen.

Zwischen der Nahzone 31 und der Fernzone 32 befindet sich noch eine mittlere Zone 33.

Vorteilhaft kann die verwendete Überwachungseinrichtung 13, welche in dem Ausführungsbeispiel der Figur 4 über die beiden an unterschiedlichen Stellen an der Wand montierten Kameras 15 ausgebildet ist, spezifisch detektieren, in welcher Unterzone 31, 32, 33 sich die Person 50, 50a befindet. Es werden also zonenspezifische Signale detektiert, welche von der Person 50 in der Nahzone 31 bzw. von der Person 50a in der Fernzone 32 ausgehen.

Dabei muss das zonenspezifische Signal nicht aktiv durch die Person 50 bzw. 50a ausgelöst werden. Vielmehr wird das zonenspezifische Signal durch die Person 50 bzw. 50a lediglich hervorgerufen, etwa durch die Anwesenheit bzw. durch die Art einer Fortbewegung der Person 50 bzw. 50a in der jeweiligen Unterzone. So kann beispielsweise über ein Kamera-Tracking eine Person 50 bzw. 50a in der Unterzone bzw. deren Bewegung verfolgt werden und daraus ein zonenspezifisches Signal generiert werden. Das zonenspezifische Signal kann also durch die einfache Anwesenheit bzw. die Bewegung der Person 50 bzw. 50a in der Unterzone bewirkt bzw. hervorgerufen werden.

Dabei können folgende Umstände in das zonenspezifische Signal einfließen:
- In welcher Unterzone befindet sich die Person 50 bzw. 50a, und/oder
- in welche Unterzone begibt sich die Person 50 bzw. 50a, und/oder
- wie sieht ein Bewegungsmuster der Person 50 bzw. 50a aus?

Das Bewegungsmuster der Person 50 bzw. 50a kann sich darauf beziehen, wie eine Bewegungsrichtung der Person 50 bzw. 50a und/oder eine Bewegungsgeschwindigkeit der Person 50 bzw. 50a ist. Die Bewegungsrichtung kann dabei über einen Richtungsvektor über die Zeit repräsentiert sein. Hierüber kann das Bewegungsmuster der Person 50 bzw. 50a innerhalb einer Umgebungszone 30 bzw. Unterzone erfasst und beispielsweise auch der Analyse der Absicht der Interaktion der Person 50 bzw. 50a zugrunde gelegt werden. Mit der Information, in welche Unterzone sich eine Person 50 bzw. 50a begibt, wird ein Zonenwechsel einer Person 50 bzw. 50a erfassbar und kann der Analyse zugrunde gelegt werden. Analyse der Bewegungsdaten können ebenso dazu zugrunde gelegt werden, eventuelle Sabotagehandlungen zu erkennen.

Über die Ausbildung und Beobachtung von Bewegungen in den unterschiedlichen Unterzonen kann das Anwesenheitserfassungsterminal 10 auch vorteilhaft in unterschiedliche Betriebsmodi versetzt werden. So kann etwa ein Wecken aus einem energiesparenden Sleep Mode in Abhängigkeit davon erfolgen, in welcher Unterzone sich die Person 50 bzw. 50a befindet bzw. auf welche Weise sich die Person 50 bzw. 50a etwa in einer Unterzone fortbewegt. Betritt die Person 50 bzw. 50a beispielsweise lediglich die Fernzone 32 und wird dort grundsätzlich detektiert, nähert sich jene Person 50 bzw. 50a jedoch nicht weiter dem Anwesenheitserfassungsterminal 10 an und betritt demnach nicht die mittlere Zone 33 oder die Nahzone 31, so kann daraus geschlossen werden, dass die Person 50 bzw. 50a gar nicht in Interaktion mit dem Anwesenheitserfassungsterminal 10 treten möchte. Dann kann das Anwesenheitserfassungsterminal 10 besonders sparsam betrieben werden.

Das in Figur 3 wiedergegebene Beispiel eines Flurs 300, der eine T-Gabelung aufweist, veranschaulicht die unterschiedlichen Unterzonen, dargestellt über gestrichelte Teilkreise, die das Anwesenheitserfassungsterminal 10 in unterschiedlichen Abständen umgeben. Die Person 50, die sich in der Nahzone 31 befindet, interagiert mit dem Anwesenheitserfassungsterminal 10. Die Person 50a wiederum befindet sich in der Fernzone 32, in welcher zwar eine grundsätzliche Detektion der Person 50a mittels der Kameras 15 des Anwesenheitserfassungsterminal 10 stattfindet, was jedoch noch nicht dazu führen würde, dass eine Interaktion der Person 50a erwartet wäre oder beispielsweise aber auch dass die Handlungen hinsichtlich einer potentiellen Sabotage analysiert werden. Erst wenn die Person 50a auch die mittlere Zone 33 bzw. je nach gewünschter Konfiguration die Nahzone 31 betritt, wird die spezifischere Überwachung ebenfalls aktiviert. Die dritte Person 50b wiederum befindet sich außerhalb der gesamten Umgebungszone 30, sodass in Bezug auf die Person 50b gar keine Detektion der Person 50b stattfindet. Das Anwesenheitserfassungsterminal 10 detektiert die Person 50b in der dargestellten Konfiguration nicht, da klar ist, dass keine Interaktion mit dem Anwesenheitserfassungsterminal 10 durch die Person 50b gewünscht ist bzw. da keine Sabotage aus jener fernen Distanz zu erwarten ist.

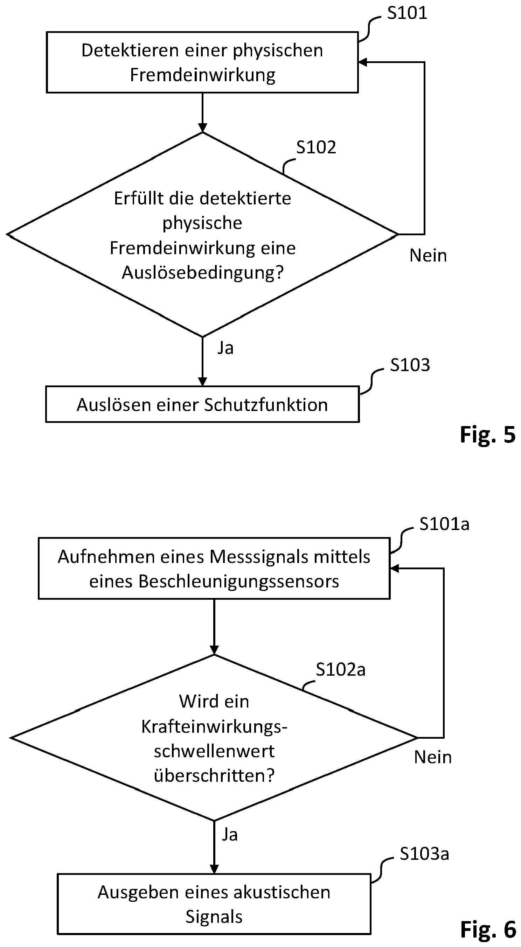

In Figur 5 ist ein Ausführungsbeispiel des vorschlagsgemäßen Verfahrens zum geschützten Betreiben des Anwesenheitserfassungsterminals 10 dargestellt, wodurch die negativen Auswirkungen eines Sabotageversuchs minimiert werden. Dabei wird im Rahmen von Schritt S101 zunächst eine physische Fremdeinwirkung von außen auf das Anwesenheitserfassungsterminal 10 detektiert. Die physische Fremdeinwirkung kann beispielsweise eine Temperatur sein, die in unmittelbarer Nähe des Anwesenheitserfassungsterminals 10 herrscht. Es kann sich jedoch auch um eine Krafteinwirkung von außen handeln. In diesem Schritt sollen grundsätzlich die durch die zuvor beschriebenen Sabotagehandlungen verursachten Daten detektiert werden, also beispielsweise eine erhöhte Temperatur, eine Erschütterung, oder beispielsweise auch ein ungewöhnliches Bewegungsmuster einer Person 50, 50a, 50b, welches durch ein Kameratracking erfassbar sein könnte (vgl. Flur in Figur 4).

Im Verfahrensschritt S102 wird sodann überprüft, ob die physische Fremdeinwirkung, die von außen auf das Anwesenheitserfassungsterminal 10 wirkt und zuvor detektiert worden ist, eine vorgegebene Auslösebedingung erfüllt oder nicht. Sollte die Auslösebedingung erfüllt sein, so wird im Schritt S103 wenigstens eine Schutzfunktion ausgelöst. Denn sollte die physische Fremdeinwirkung ungewöhnlicher Natur sein, so kann auf eine ungewünschte Sabotagehandlung geschlossen werden und die Ausführung einer spezifischen Schutzfunktion erwünscht sein.

Zusammengefasst läuft das vorschlagsgemäße computerimplementierte Verfahren zum geschützten Betreiben des Anwesenheitserfassungsterminals 10über die folgenden drei Schritte ab:
a) Detektieren einer physischen Fremdeinwirkung von außen auf das Anwesenheitserfassungsterminal 10;
b) Überprüfen, ob die physische Fremdeinwirkung von außen eine vorgegebene Auslösebedingung erfüllt; sowie
c) Auslösen wenigstens einer Schutzfunktion, falls das Überprüfen ergibt, dass die physische Fremdeinwirkung von außen die Auslösebedingung erfüllt.

Ein konkretes Beispiel des vorschlagsgemäßen Verfahrens ist in Figur 6 dargestellt, wobei der zuvor allgemein beschriebene Schritt S101 derart realisiert ist, dass im Rahmen des Schrittes S101a ein Messsignal mittels eines Beschleunigungssensors 17 (vgl. Figur 3) aufgenommen wird. Bei dem entsprechenden Verfahren wird demnach die physische Fremdeinwirkung von außen im zuvor erwähnten Verfahrensschritt a) mittels des Beschleunigungssensors 17 detektiert, wobei während des Überprüfens gemäß Verfahrensschritt b) (zuvor Schritt S102 in Figur 5) ein detektiertes erfasstes Beschleunigungssensorsignal mit einem vorgegebenem Krafteinwirkungsschwellenwert verglichen wird (Schritt S102a in Figur 6). Der Beschleunigungssensor 17 schlägt je nach Stärke einer Erschütterung, die das Anwesenheitserfassungsterminal 10 erfährt, unterschiedlich stark an. Demnach kann ein Krafteinwirkungsschwellenwert vorgegeben werden, bis zu dem Erschütterungen noch als normal und zulässig angesehen werden. Wird jedoch durch die physische Fremdeinwirkung jener Krafteinwirkungsschwellenwert überschritten, so wird von einer ungewöhnlichen Krafteinwirkung ausgegangen, die repräsentativ für eine Sabotagehandlung stehen kann. Sodann wird eine Schutzfunktion ausgelöst (zuvor Verfahrensschritt c)), wobei es sich in dem in Figur 6 dargestellten Fall dabei um die Ausgabe eines akustischen Signals in Form eines Warntons handelt (Schritt S103a). Jenes akustische Signal, beispielsweise ausgegeben über den Lautsprecher 19 des Anwesenheitserfassungsterminals 10 (vgl. Figuren 1 bis 3), dient der Abschreckung der sabotierenden Person oder aber auch der Warnung bzw. Mitteilung über den Sabotageversuch an umstehende oder in der Nähe befindliche Personen.

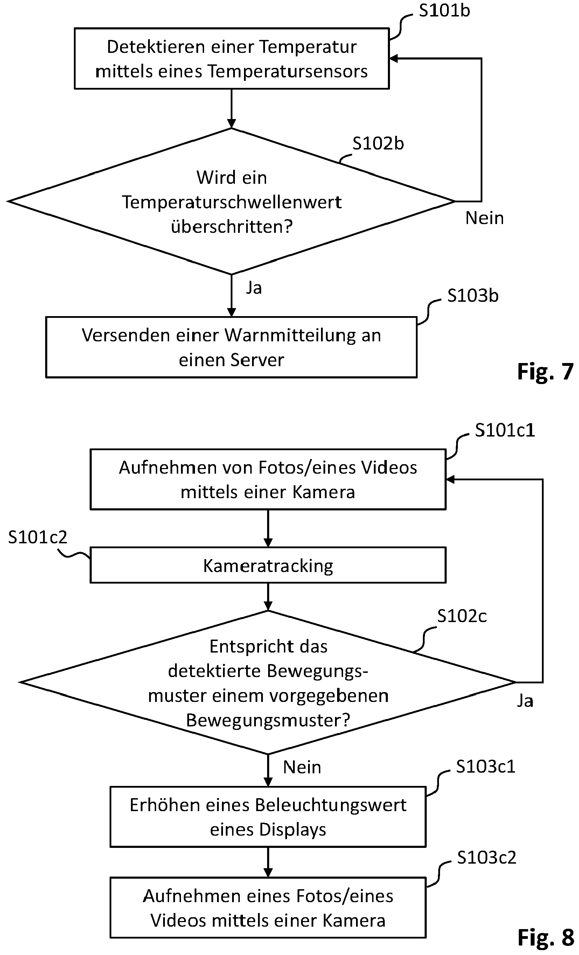

Ein weiteres konkretes Beispiel des vorschlagsgemäßen Verfahrens ist in Figur 7 dargestellt, wobei der zuvor allgemein beschriebene Schritt S101 derart realisiert ist, dass im Rahmen des Schrittes S101b eine Temperatur mittels eines Temperatursensors 18 (vgl. Figur 3) aufgenommen wird. Bei dem entsprechenden Verfahren wird demnach die physische Fremdeinwirkung von außen im zuvor erwähnten Verfahrensschritt a) mittels des Temperatursensors 18 detektiert, wobei während des Überprüfens gemäß Verfahrensschritt b) (zuvor Schritt S102 in Figur 5) eine detektierte Temperatur mit einem Temperaturschwellenwert verglichen wird (Schritt S102b in Figur 7).

Dabei kann besonders vorteilhaft vorgesehen sein, dass der Temperaturschwellenwert in Abhängigkeit von einer Umgebungstemperatur bestimmt wird. Sprich an heißen Tagen, an denen die Umgebungstemperatur hoch ist, kann der Temperaturschwellenwert beispielsweise nach oben angepasst sein und umgekehrt. Hier kann entweder eine erfasste Umgebungstemperatur einfließen (über ein zusätzliches Thermometer) oder aber auch eine im System hinterlegte Temperatur, indem etwa eine Onlineverbindung zu einem Wetterdienst ausgebildet und hierüber die Umgebungstemperatur abrufbar ist. Es kann als Sicherheitsfunktion auch implementiert sein, dass sich der Temperatursensor 18, bspw. an warmen Tagen, abschalten kann, um etwa Fehlinterpretationen von vermeintlichen Sabotagehandlungen zu vermeiden.

Grundsätzlich kann ein Temperaturschwellenwert vorgegeben werden, bis zu dem detektierte Temperaturen noch als gewöhnlich angesehen werden. Wird jedoch durch die physische Fremdeinwirkung jener Temperaturschwellenwert überschritten, so wird von einer ungewöhnlichen Temperatur ausgegangen, die repräsentativ für eine Sabotagehandlung stehen kann. Sodann wird eine Schutzfunktion ausgelöst (zuvor Verfahrensschritt c)), wobei es sich in dem in Figur 7 dargestellten Fall dabei um das Versenden einer Warnmitteilung an einen Server 40 handelt (Schritt S103b). Vorteilhaft ist, wenn die Warnmitteilung über eine kommunikationstechnische Verbindung wie eine Internetverbindung an den Server 40 gesendet wird. Sodann können Personen in dem Unternehmen über die versuchte Sabotagehandlung unmittelbar in Kenntnis gesetzt werden und können Gegenmaßnahmen einleiten.

Gemäß einem weiteren, in Figur 8 dargestellten Ausführungsbeispiel des vorschlagsgemäßen Verfahrens wird die physische Fremdeinwirkung von außen im Verfahrensschritt a) (vgl. Schritt S101 in Figur 5) mittels wenigstens einer Kamera 15 detektiert. Dazu werden zunächst mittels der Kamera 15 Fotos aufgenommen, bzw. beispielsweise auch ein Video (Teilschritt S101c1), woraufhin ein Kameratracking im Rahmen von Teilschritt S101c2 erfolgt. Während des Detektierens gemäß Verfahrensschritt a) erfolgt demnach das Kameratracking und ein detektiertes Bewegungsmuster einer mit dem Anwesenheitserfassungsterminal 10 interagierenden Person 50 bzw. 50a wird mit einem vorgegebenem Bewegungsmuster verglichen.

Im Rahmen des Verfahrensschritts b) des Abgleichs mit einer Auslösebedingung (vgl. Schritt S102 in Figur 5) wird im Verfahren gemäß Figur 8 das detektierte Bewegungsmuster also mit vorgegebenen Bewegungsmustern abgeglichen (Schritt S102c in Figur 8). Jene vorgegebenen Bewegungsmustern könnten auch für einzelnen interagierende Personen 50 bzw. 50a spezifisch hinterlegt und etwa im in der Speicherverwaltungseinheit 20 des Anwesenheitserfassungsterminals 10 entweder lokal oder auch auf dem Server 40 gespeichert sein.

Ergibt jene Überprüfung der Auslösebedingung, dass ein entsprechendes Bewegungsmuster vorhanden und vorgegeben ist, so kann der Rückschluss gezogen werden, dass keine ungewöhnliche Bewegung vorliegt und somit wohl keine Sabotagehandlung zu erwarten ist. Sollte jedoch kein entsprechendes Bewegungsmuster hinterlegt sein, dann kann der Rückschluss auf eine potentielle Sabotagehandlung erfolgen. Hieraus folgend wird die Schutzfunktion (Verfahrensschritt c); vgl. Schritt S103 in Figur 5) gemäß Ausführungsbeispiel der Figur 8 derart ausgelöst, dass zunächst ein Beleuchtungswert des Displays 12 des Anwesenheitserfassungsterminals 10 erhöht wird (Teilschritt S103c1) und sodann ein Foto oder gar ein Video mittels der Kamera 15 aufgenommen wird (Teilschritt S103c2).

Die Erhöhung der Displayhelligkeit dient dazu, dass auf einem aufgenommenen Foto möglichst viel zu erkennen ist. Dies ist insbesondere vorteilhaft, da Sabotageversuche vor allem nachts bzw. im Dunkeln erfolgen. Bei der Erhöhung der Displayhelligkeit ist auch eine kurzzeitige Erhöhung der Displayhelligkeit über MAX möglich.

Die zuvor bzw. nachfolgend beschriebenen Schutzfunktionen können auch kombiniert realisiert sein, also gemeinsam im Falle des Erfüllens der Auslösebedingung ausgelöst werden, oder aber auch abhängig von Art der erfüllten Auslösebedingung eine spezifische Schutzfunktion, während eine andere Schutzfunktion bei einer anderen Art an erfüllter Auslösebedingung ausgelöst wird.

Eine alternative Schutzfunktion gemäß Verfahrensschritt c) kann beispielsweise darin bestehen, dass wenigstens eine Tonaufnahme mittels des Mikrophons 16 erfolgt. Konkret können die Schutzfunktionen auch mehrteilig bzw. zeitlich hintereinander gestaffelt ablaufen. So ist denkbar, dass eine im Rahmen der Schutzfunktion aufgenommenes Bild (oder Video) sowie eventuell zusätzlich oder alternativ auch eine Tonaufnahme in einem anschließenden Schritt weitergeleitet, also etwa an vorgegebene Empfänger und/oder den Server 40 gesendet werden. Sodann werden Personen mit konkreten Informationen in Form von Bild- und/oder Tonmaterial über die versuchte vermeintliche Sabotagehandlung informiert und können diese besser einschätzen, ehe Gegenmaßnahmen ausgeführt werden.

Weitere Schutzfunktionen, die im Rahmen des Verfahrensschritts c) denkbar sind, sind:
- das Löschen sensibler Daten, die im Anwesenheitserfassungsterminal 10 bzw. in der Speicherverwaltungseinheit 20, sei es lokal im Anwesenheitserfassungsterminal 10 oder online etwa auf dem Server 40, gespeichert sind,
und/oder
- das Ausschalten des Anwesenheitserfassungsterminals 10, wobei insbesondere eine Stromverbindung unterbrochen wird.

Bei dem Löschen der Daten ist besonders vorteilhaft, wenn zumindest alle lokal gespeicherten Daten des Anwesenheitserfassungsterminals 10 gelöscht werden.

Eine weitere physische Fremdeinwirkung kann auch in der Eingabe einer persönlichen PIN der Nutzer des Terminals liegen, etwa um eine Buchung vornehmen zu können. Sodann kann als Auslösebedingung definiert sein, dass eine PIN nicht dreimal falsch eingeben werden darf. Als Schutzfunktion kann bei Erfüllen der Auslösebedingung, also wenn der PIN doch dreimal falsch eingegeben worden ist, dann der spezifische Nutzer gesperrt werden.

Besonders vorteilhaft ist, wenn die Verfahrensschritte a) bis c) (Schritte S101 bis S103 in Figur 5 bzw. Schritte S101a bis S103a in Figur 6 bzw. Schritte S101b bis S103b in Figur 7 bzw. Schritte S101c1 bis S103c2 in Figur 8) nur während wenigstens eines vorgegebenen Zeitraums ablaufen. So können die vorgeschlagenen einer potentiellen Schädigung durch Sabotage vorbeugenden Maßnahmen etwa auch nur außerhalb der Arbeitszeiten und/oder aber auch nur nachts ablaufen, wenn gerade Sabotagehandlungen vermutet werden und grundsätzlich häufiger vorkommen. Auf diese Weise kann vorteilhaft das Terminal energiesparender betrieben werden.

## Patentansprüche

1. Computerimplementiertes Verfahren zum geschützten Betreiben eines Anwesenheitserfassungsterminals (10), insbesondere eines Zeiterfassungsterminals, zur Erfassung einer Anwesenheitsinformation einer Person (50; 50a; 50b) auf Basis einer Aktion der Person (50; 50a; 50b), umfassend die Schritte:
a) Detektieren einer physischen Fremdeinwirkung von außen auf das Anwesenheitserfassungsterminal (10);
b) Überprüfen, ob die physische Fremdeinwirkung von außen eine vorgegebene Auslösebedingung erfüllt;
c) Auslösen wenigstens einer Schutzfunktion, falls das Überprüfen ergibt, dass die physische Fremdeinwirkung von außen die Auslösebedingung erfüllt.

2. Computerimplementiertes Verfahren nach Anspruch 1, wobei die Verfahrensschritte a) bis c) nur während wenigstens eines vorgegebenen Zeitraums ablaufen.

3. Computerimplementiertes Verfahren nach Anspruch 1 oder 2, wobei die physische Fremdeinwirkung von außen im Verfahrensschritt a) mittels wenigstens eines Beschleunigungssensors (17) detektiert wird,
wobei, insbesondere, während des Überprüfens gemäß Verfahrensschritt b) ein detektiertes Beschleunigungssensorsignal mit einem vorgegebenem Krafteinwirkungsschwellenwert verglichen wird.

4. Computerimplementiertes Verfahren nach einem der Ansprüche 1 bis 3,
wobei die physische Fremdeinwirkung von außen im Verfahrensschritt a) mittels wenigstens eines Temperatursensors (18) detektiert wird,
wobei, insbesondere, während des Überprüfens gemäß Verfahrensschritt b) eine detektierte Temperatur mit einem Temperaturschwellenwert verglichen wird,
wobei, insbesondere, der Temperaturschwellenwert in Abhängigkeit von einer Umgebungstemperatur bestimmt wird.

5. Computerimplementiertes Verfahren nach einem der Ansprüche 1 bis 4,
wobei die physische Fremdeinwirkung von außen im Verfahrensschritt a) mittels wenigstens einer Kamera (15) detektiert wird,
wobei, insbesondere, während des Detektierens gemäß Verfahrensschritt a) ein Kameratracking erfolgt und ein detektiertes Bewegungsmuster einer mit dem Anwesenheitserfassungsterminal (10) interagierenden Person (50; 50a; 50b) mit einem vorgegebenem Bewegungsmuster verglichen wird.

6. Computerimplementiertes Verfahren nach einem der Ansprüche 1 bis 5, wobei die Schutzfunktion im Verfahrensschritt c) umfasst:
- Aufnehmen wenigstens eines Fotos mittels einer Kamera (15), wobei, insbesondere, ein Beleuchtungswert eines Displays (12) des Anwesenheitserfassungsterminals (10) zur Aufnahme des Fotos erhöht wird;
und/oder
- Aufnehmen wenigstens einer Tonaufnahme mittels eines Mikrophons (16);
und/oder
- Ausgeben wenigstens eines akustischen Signals.

7. Computerimplementiertes Verfahren nach einem der Ansprüche 1 bis 6, wobei die Schutzfunktion im Verfahrensschritt c) umfasst:
- Versenden wenigstens einer Warnmitteilung, wobei die Warnmitteilung insbesondere über eine kommunikationstechnische Verbindung, vorzugsweise eine Internetverbindung, an einen Server gesendet wird;
und/oder
- Löschen sensibler Daten, die im Anwesenheitserfassungsterminal (10) gespeichert sind,
insbesondere Löschen aller lokal gespeicherter Daten des Anwesenheitserfassungsterminals (10);
und/oder
- Ausschalten des Anwesenheitserfassungsterminals (10),
wobei insbesondere eine Stromverbindung unterbrochen wird.

8. Anwesenheitserfassungsterminal (10), insbesondere
Zeiterfassungsterminal, zur Erfassung einer Anwesenheitsinformation einer Person (40) auf Basis einer Aktion der Person (40), umfassend:
- eine Steuereinheit (21); sowie
- eine Überwachungseinrichtung (13) zum Detektieren einer physischen Fremdeinwirkung von außen auf das Anwesenheitserfassungsterminal (10);
wobei die Steuereinheit (21) derart eingerichtet ist, dass:
A) eine mittels der Überwachungseinrichtung (13) detektierte physische Fremdeinwirkung dahingehend überprüft wird, ob sie eine vorgegebenen Auslösebedingung erfüllt; und
B) wenigstens eine Schutzfunktion ausgelöst wird, falls das Überprüfen in Schritt A) ergibt, dass die detektierte physische Fremdeinwirkung die Auslösebedingung erfüllt.

9. Anwesenheitserfassungsterminal (10) nach Anspruch 8, wobei die Überwachungseinrichtung (13) derart eingerichtet ist, dass das Detektieren der physischen Fremdeinwirkung nur während wenigstens eines vorgegebenen Zeitraums abläuft;
und/oder
wobei die Steuereinheit (21) derart eingerichtet ist, dass die Schritte A) und B) nur während wenigstens eines vorgegebenen Zeitraums ablaufen.

10. Anwesenheitserfassungsterminal (10) nach Anspruch 8 oder 9, wobei die Überwachungseinrichtung (13) zum Detektieren der physischen Fremdeinwirkung von außen wenigstens einen Beschleunigungssensor (17) aufweist,
wobei, insbesondere, während des Überprüfens gemäß Schritt A) ein detektierts Beschleunigungssensorsignal mit einem vorgegebenem Krafteinwirkungsschwellenwert verglichen wird.

11. Anwesenheitserfassungsterminal (10) nach einem der Ansprüche 8 bis 10,
wobei die Überwachungseinrichtung (13) zum Detektieren der physischen Fremdeinwirkung von außen wenigstens einen Temperatursensor (18) aufweist,
wobei, insbesondere, während des Überprüfens gemäß Schritt A) eine detektierte Temperatur mit einem Temperaturschwellenwert verglichen wird,
wobei, insbesondere, der Temperaturschwellenwert in Abhängigkeit von einer Umgebungstemperatur bestimmt wird.

12. Anwesenheitserfassungsterminal (10) nach einem der Ansprüche 8 bis 11,
wobei die Überwachungseinrichtung (13) zum Detektieren der physischen Fremdeinwirkung von außen wenigstens eine Kamera (15) aufweist,
wobei, insbesondere, während des Überprüfens gemäß Schritt A) ein Kameratracking stattfindet und ein detektiertes Bewegungsmuster einer mit dem Anwesenheitserfassungsterminal (10) interagierenden Person (50; 50a) mit einem vorgegebenem Bewegungsmuster verglichen wird.

13. Anwesenheitserfassungsterminal (10) nach einem der Ansprüche 8 bis 12, wobei die Steuereinheit (21) derart eingerichtet ist, dass die Schutzfunktion im Schritt B) umfasst:
- Aufnehmen wenigstens eines Fotos mittels einer Kamera (15), wobei, insbesondere, ein Beleuchtungswert eines Displays (12) des Anwesenheitserfassungsterminals (10) zur Aufnahme des Fotos erhöht wird;
und/oder
- Aufnehmen wenigstens einer Tonaufnahme mittels eines Mikrophons (16);
und/oder
- Ausgeben wenigstens eines akustischen Signals.

14. Anwesenheitserfassungsterminal (10) nach einem der Ansprüche 8 bis 13, wobei die Steuereinheit (21) derart eingerichtet ist, dass die Schutzfunktion im Schritt B) umfasst:
- Versenden wenigstens einer Warnmitteilung,
wobei die Warnmitteilung insbesondere über eine kommunikationstechnische Verbindung, vorzugsweise eine Internetverbindung, an einen Server gesendet wird;
und/oder
- Löschen sensibler Daten, die im Anwesenheitserfassungsterminal (10) gespeichert sind, insbesondere Löschen aller lokal gespeicherter Daten des Anwesenheitserfassungsterminals (10);
und/oder
- Ausschalten des Anwesenheitserfassungsterminals (10), wobei insbesondere eine Stromversorgung unterbrochen wird.

15. Computerprogramm, umfassend Befehle, die bei der Ausführung des Programms durch einen Prozessor eines Anwesenheitserfassungsterminals (10) das Anwesenheitserfassungsterminal (10) veranlassen, die Schritte des Verfahrens nach einem der Ansprüche 1 bis 7 auszuführen.
